**Europäisches Patentamt**

**European Patent Office**

**Office européen des brevets**

(19)

(11) Veröffentlichungsnummer: **0 111 802**
**B1**

(12) # EUROPÄISCHE PATENTSCHRIFT

(45) Veröffentlichungstag der Patentschrift:
**08.04.87**

(21) Anmeldenummer: **83112177.7**

(22) Anmeldetag: **03.12.83**

(51) Int. Cl.⁴: **C 01 B 25/234,** C 01 B 25/46

(54) **Verfahren zur Reinigung von Nassverfahrensphosphorsäure.**

(30) Priorität: **15.12.82 DE 3246416**

(43) Veröffentlichungstag der Anmeldung:
**27.06.84 Patentblatt 84/26**

(45) Bekanntmachung des Hinweises auf die Patenterteilung:
**08.04.87 Patentblatt 87/15**

(84) Benannte Vertragsstaaten:
**BE DE FR GB NL**

(56) Entgegenhaltungen:
**DE-B-2 320 877**
**DE-C-1 258 847**

(73) Patentinhaber: **HOECHST AKTIENGESELLSCHAFT,
Postfach 80 03 20, D-6230 Frankfurt am Main 80
(DE)**

(72) Erfinder: **Gradl, Reinhard, Dr., Am grünen Weg 6,
D-5030 Hürth (DE)**
Erfinder: **Roszinski, Hilmar, Dr., Julius- Leber-
Strasse 7, D-5042 Erftstadt (DE)**

## Beschreibung

Zur Herstellung von Phosphorsäure sind zwei prinzipiell verschiedene Wege bekannt, die beide in großtechnischem Umfang angewandt werden. So kann Phosphorsäure aus den Rohphosphaten nach dem nassen und nach dem thermischen Aufschlußverfahren hergestellt werden. Beim thermischen Verfahren wird das Rohphosphat mit Kieselsäure und Koks im elektrischen Widerstandsofen bei hohen Temperaturen aufgeschlossen und anschließend der dabei entstehende Phosphor zu $P_4O_{10}$ verbrannt, das zu Phosphorsäure hydrolisiert wird. Dieses Verfahren liefert eine sehr reine Phosphorsäure, deren Salze auch in der Lebensmittelindustrie eingesetzt werden können.

Beim sogenannten Naßverfahren wird das Rohphosphat mit Mineralsäuren aufgeschlossen. Als Aufschlußsäuren werden Salzsäure und Salpetersäure, bevorzugt aber Schwefelsäure verwendet. Im letzteren Fall entstehen als Reaktionsprodukte je nach gewählten Temperatur- und Konzentrationsverhältnissen wasserfreies Calciumsulfat, Halb- oder Dihydrat sowie die Rohphosphorsäure. Je nach eingesetztem Rohphosphat entstehen bei dem Naßverfahren mehr oder weniger stark verunreinigte Säuren. Wenn diese Säure nicht für Düngemittel sondern für die Herstellung technischer Phosphate bestimmt ist, muß sie gereinigt werden. Als Reinigungsverfahren werden großtechnisch zwei Verfahrensprinzipien angewandt:

Die Reinigung durch Ausfällung der Verunreinigungen und die Reinigung durch Extraktion der Phosphorsäure mit Hilfe organischer Lösemittel.

Durch den Anstieg der Strom- und Kokspreise und damit der Herstellkosten für thermische Phosphorsäure haben das Naßaufschluß- und die entsprechenden Reinigungsverfahren, die mit wesentlich geringerem Energieaufwand arbeiten, immer mehr an Bedeutung erlangt.

Andererseits hat das thermische Verfahren den Vorteil, daß direkt Rohphosphat eingesetzt werden kann und daß auch stark $SiO_2$-haltige oder größere Mengen organischer Verunreinigungen enthaltende Phosphate eingesetzt werden können. Die im Rohphosphat enthaltenen Verunreinigungen werden in Form ihrer Oxide bzw. Silikate mit der Ofenschlacke ausgeschleust und können problemlos deponiert werden.

Der Naßaufschluß von Rohphosphat wird heute immer mehr von den Phosphatlieferländern selbst durchgeführt, so daß Rohphosphorsäuren auf dem Weltmarkt erhältlich sind. Für die Reinigung dieser Säuren kennt man seit langem mehrstufige Fällungsverfahren, die vor und während der Neutralisation der Phosphorsäure ausgeführt werden.

Bei der im Gegensatz zum thermischen Verfahren meistens kostengünstigeren Fällungsreinigung kann man vorteilhaft von verdünnten Phosphorsäuren ausgehen, wie sie z.B. nach dem Dihydrat-Aufschlußverfahren erhalten werden. Nach Fällung der Sulfationen durch Ca- oder Ba-Chemikalien werden meist die Schwermetalle wie As, Cu und Pb durch $Na_2S$-Lösung ausgefällt und schließlich bei der anschließenden Neutralisation mit NaOH oder $Na_2CO_3$ die restlichen kationischen Verunreinigungen (Fe, Al, Mg, Ca) in einer oder zwei Stufen abgetrennt.

Nachteilig bei diesem Verfahren ist der Aufwand für die Deponierung der Neutralisationsschlämme und die Überführung der Phosphorsäure in eine Phosphatsalzlösung, die nur eingeschränkte Anwendung findet.

Zunehmende Bedeutung gewinnen Verfahren, die Naßphosphorsäure durch Extraktion mit Hilfe organischer Lösungsmittel reinigen.

Dabei wird - meist vorgereinigte - Rohsäure mit dem Lösungsmittel in mehreren Stufen im Gegenstrom in Kontakt gebracht, der entstehende Rohextrakt zur Entfernung geringer Anteile an ionischen Verbindungen mit Wasser, $H_3PO_4$ oder Salzlösung gewaschen und schließlich die Phosphorsäure aus dem Reinextrakt durch Reextraktion mit Wasser oder Alkalien oder durch Abdestillieren des Lösungsmittels gewonnen.

Bei diesem Verfahren können sehr reine Säuren in sehr guten Ausbeuten erhalten werden. Dazu sind allerdings in Extraktion und Waschung viele Stufen erforderlich. Außerdem sind hierbei, wie bei der Fällungsreinigung, die Aufarbeitung der die Verunreinigungen enthaltenden Rückstände und ihre Deponierung problematisch.

Bei den Verfahren, die nach dem sogenannten Splittingprozeß z.B. DE-B-23 20 877 arbeiten, wird nur ein Teil des Roh-$P_2O_5$ extrahiert und in Form gereinigter Phosphorsäure gewonnen, während der Rest in der Raffinatphase verbleibt, so daß eine Weiterverarbeitung dieser Raffinatsäure nur in der Düngemittelindustrie möglich ist, wobei sehr nachteilig ist, daß dadurch bestimmte Verunreinigungen, und insbesondere die ökologisch kritischen Schwermetalle, in den Düngemitteln angereichert werden.

An vielen Standorten der Phosphorsäure erzeugenden Industrie sind heute aus Gründen der Anpassung an die technologische Entwicklung und der in zunehmendem Maße erforderlich gewordenen Flexibilität gegenüber Preisschwankungen und Verfügbarkeit von Energie und Rohstoffen mehrere der beschriebenen Verfahren gleichzeitig oder alternativ in Betrieb.

Aufgabe der vorliegenden Erfindung ist es, ein Verfahren zu verbessern, daß darauf beruht, rohe Naßverfahrensphosphorsäure, die einen Gehalt von mehr als 43 Gew% $P_2O_5$ aufweist zu reinigen, indem man das Ausgangsprodukt mit einem organischen Lösungsmittel, das mit Wasser nicht oder nur begrenzt mischbar und Phosphorsäure zu lösen imstande ist, so in Kontakt bringt, daß unter Bildung eines wäßrigen Phosphorsäureraffinates, welches einen

geringeren $P_2O_5$-Gehalt als das Ausgangsprodukt besitzt, lediglich ein Teil des im Ausgangsprodukt enthaltenen $P_2O_5$ von dem Lösungsmittel aufgenommen wird. Anschließend trennt man die dadurch entstandene organische Phosphorsäurelösung von dem Phosphorsäureraffinat, wäscht sie aus und führt die erhaltene Waschlösung in den Prozeß zurück. Aus der gewaschenen organischen Phosphorsäurelösung gewinnt man dann in bekannter Weise die gereinigte Phosphorsäure bzw. Phosphatsalzlösung (Alkali- oder Ammoniumphosphat), während man das verbliebene Phosphorsäureraffinat einer anderweitigen Verwendung zuführt.

Überraschenderweise läßt sich eine entscheidende Verbesserung dieses Verfahrens in technischer und wirtschaftlicher Hinsicht erzielen, wenn man

a) durch Vermischen des Ausgangsproduktes mit dem organischen Lösungsmittel in einer einzigen Verfahrensstufe so viel Phosphorsäure aus der rohen Naßverfahrensphosphorsäure extrahiert, daß zwischen 40 und 70 Gew%, vorzugsweise 50 bis 55 Gew% des eingesetzten $P_2O_5$ in die organische Phase überführt werden und das entstehende wäßrige Phosphorsäureraffinat nur noch einen $P_2O_5$-Gehalt von 28 bis 32 Gew%, vorzugsweise von 30 bis 32 Gew%, aufweist, indem man das Lösungsmittel mit dem Ausgangsprodukt in einem Volumenverhältnis von mehr als 4:1, vorzugsweise von 6:1-10:1, vermischt und die entstandene organische Phosphorsäurelösung von dem Phosphorsäureraffinat abtrennt;

b) dann die abgetrennte organische Phosphorsäurelösung mit einer Waschlösung auswäscht, deren Menge höchstens 5 %, vorzugsweise 3,3 bis 2 %, des Volumens der Phosphorsäurelösung beträgt, darauf die Waschlösung in die Stufe a) zurückführt, dann aus der gewaschenen Phosphorsäurelösung in bekannter Weise die gereinigte Phosphorsäure bzw. Phosphatsalzlösung gewinnt;

c) das in Stufe a) entstandene wäßrige Phosphorsäureraffinat - gegebenenfalls nach vorheriger Entfernung von Lösungsmittelresten - mit Alkalien, vorzugsweise in einer oder zwei Stufen bis pH 9, neutralisiert, wobei eine gereinigte Phosphatsalzlösung entsteht und ein sogenannter Neutralisationsschlamm ausfällt;

d) diesen Neutralisationsschlamm von der entstandenen Alkaliphosphatlösung abtrennt, zweckmäßigerweise auswäscht, das Waschfiltrat mit der Alkaliphosphatlösung vereinigt und anschließend den Neutralisationsschlamm mit feingemahlenem Phosphaterz vermischt und aus dem Gemisch Phosphatformlinge zur elektrothermischen Phosphorgewinnung herstellt.

Ausgangsprodukt des erfindungsgemäßen Verfahrens ist, wie bereits erwähnt, eine handelsübliche Rohphosphorsäure mit einem $P_2O_5$-Gehalt von mehr als 45 Gew%. Wenn ein hoher Reinigungsgrad angestrebt wird, ist eine Vorreinigung dieser Säure vor allem von der als Hauptverunreinigung enthaltenen Schwefelsäure und den organischen Verunreinigungen empfehlenswert.

Dazu wird die Säure in an sich bekannter Weise mit Calciumionen in Gegenwart von Aktivkohle bei etwa 80°C behandelt, wobei über zwischenzeitlich gebildetes Calciumsulfathalbhydrat eine vorgereinigte (meist grün gefärbte) Säure entsteht sowie ein im wesentlichen aus Gips bestehender Filterkuchen, dessen Menge etwa 5 - 6 Gew% der eingesetzten Rohsäure ausmacht und der problemlos deponiert werden kann.

Die meisten Rohsäuren enthalten in der Regel außerdem als Verunreinigungen neben Ionen von Schwermetallen wie Cadmium, Kupfer, Blei und Quecksilber, auch Ionen des Arsens. Falls die Verwendung der Verfahrensprodukte oder die Umwelt- bzw. Deponieprobleme es erfordern, daß diese Verunreinigungen entfernt bzw. in konzentrierter Form einer Spezialdeponie zugeführt werden müssen, können diese Ionen vor der Extraktion in einem einfachen Verfahrensschritt aus der gegebenenfalls vorgereinigten Rohsäure durch deren Behandlung mit Diorganyldithiophosphorsäureestern und einem Adsorptionsmittel entfernt werden. Alternativ ist es möglich, diese Maßnahme auch nach der Extraktionsstufe mit dem erhaltenen Phosphorsäureraffinat durchzuführen.

Eine weitere Möglichkeit zur Erzielung einer reinen insbesondere $SO_4$-Ionen armen Phosphorsäure ist beispielsweise in der europäischen Patentanmeldung EP-A-0029 132 beschrieben, wonach in einer mehrstufigen Gegenstromextraktion in Gegenwart von Schwefelsäure mit Hilfe organischer Lösungsmittel, die mit Wasser nicht oder nur begrenzt mischbar sind, die Sulfationen durch Zugabe von Bariumverbindungen entfernt werden und die Phosphorsäure aus dem abgetrennten organischen Extrakt rückgewonnen wird. Hierbei nimmt man die Reinigung in einer n-stufigen Extraktionsanlage vor, in der n gleich oder größer 5 ist; setzt die Bariumverbindung der zu reinigenden Phosphorsäure zu und führt die erhaltene Mischung am Kopf der Extraktionsanlage zu. Außerdem dispergiert man die organische Lösungsmittelphase in der wäßrigen Phase und führt die Schwefelsäure im Gegenstrom zur Phosphorsäure, indem sie in einer der Stufen von Stufe 4 bis Stufe n-1 zugegeben wird.

Vorzugsweise wird bei dem erfindungsgemäßen Verfahren das organische Lösungsmittel im Kreislauf geführt und mit dem Wassergehalt eingesetzt, mit dem es nach Gewinnung der gereinigten Phosphorsäure bzw. Phosphorsalzlösung aus der organischen Phosphorsäurelösung anfällt. Als organisches Lösungsmittel eignet sich hierzu Amylalkohol, insbesondere solcher, der aus der Oxosynthese stammt.

Die Extraktionsausbeute (bzw. das Splittingverhältnis) hängt ab von der $P_2O_5$-Konzentration der Rohsäure, von der Stufenzahl, vom Lösungsmittel : Säure-Verhältnis und von der zurückgeführten Waschwassermenge. Erfindungsgemäß beträgt die Säurekonzentration mindestens 45 Gew% $P_2O_5$ und die Extraktion erfolgt in einer Stufe. Durch das Lösungsmittel-Säure-Verhältnis wird aber nicht nur die Extraktionsausbeute, sondern auch die $P_2O_5$-Konzentration in der organischen und in der wäßrigen Phase bestimmt. Für manche Fälle mag es notwendig sein, die $P_2O_5$-Konzentration im Extrakt und in der wäßrigen Phase groß zu wählen, also mit kleinem Lösungsmittel-Säure-Verhältnis zu extrahieren, wie diese auch in der DE-B-23 20 877 beschrieben ist. Nach dieser bekannten Arbeitsweise werden zwischen 64,6 bis 70 Gew% des eingesetzten $P_2O_5$ extrahiert, wobei empfohlen wird, mehr als 1 Stufe zu verwenden. Um bei niedriger Stufenzahl hohe Konzentrationen zu erzielen, wird bewußt das Lösungsmittel-Säure-Verhältnis mit 1,2 - 1,4 : 1 sehr klein gewählt. Höhere Verhältnisse werden als nachteilig bezeichnet, da damit ein Bedarf an größeren Reaktionsgefäßen verbunden sei.

Von erheblichem Nachteil bei diesem Verfahren aber ist, daß durch das niedrige Lösungsmittel-Säure-Verhältnis die Selektivität des Lösungsmittels sehr gering ist. Deshalb entsteht bei der Extraktion ein stark verunreinigter Extrakt. Der Abreicherungsgrad für Eisen bezogen auf $P_2O_5$ liegt bei nur ca. 63 Gew% von der Rohsäure zum organischen Extrakt. Es ist deshalb erforderlich, diesen Extrakt in mehreren Stufen mit einer großen Menge gereinigter Phosphorsäure zu waschen. Das Verhältnis Extrakt zu Waschsäure liegt dabei zwischen 2 und 4 : 1. Bei Verwendung der aus der Rückextraktion abfließenden Reinsäure als Waschflüssigkeit bedeutet dies, daß 25 bis 46 Gew% der anfallenden Säure wieder zurückgeführt werden müssen, so daß die schon gereinigte Phosphorsäure zum großen Teil wieder abgewertet wird.

Aber selbst durch diesen großen Aufwand wird nur ein mäßiger Reinheitsgrad der Säure erzielt.

Außerdem entsteht bei der Extraktion eine wäßrige Phase, die einen Gehalt von 40 bis 47 Gew% $P_2O_5$ aufweist. Normalerweise aber beträgt der $P_2O_5$-Gehalt von konzentrierten Rohphosphorsäuren mindestens 50 Gew% $P_2O_5$ und von Rohphosphorsäuren nach dem Dihydratprozeß ca. 30 Gew% $P_2O_5$, so daß diese wäßrigen Rückstände für eine Weiterverarbeitung entsprechend verdünnt oder konzentriert werden müssen.

Erfindungsgemäß ist es aber von Vorteil, mit einem hohen Lösungsmittel-Säure-Verhältnis zu extrahieren und niedrige $P_2O_5$-Konzentrationen in der organischen Phase in Kauf zu nehmen, da dadurch, wie überraschend gefunden wurde, die Selektivität des Lösungsmittels weniger stark mit Kationen verunreinigt ist. Auf diese Weise werden die kationischen Verunreinigungen (z.B.

gemessen am Eisen-Gehalt) von der Rohsäure zum organischen Extrakt um über 90 % abgereichert. Für bestimmte Anwendungsgebiete genügt die Reinheit einer aus einem solchen Extrakt gewinnbaren Reinsäure. Für höhere Reinheitsansprüche kann dieser Extrakt in 1 bis 3 Waschstufen gereinigt werden. Dazu genügt dann jedoch eine sehr kleine Wassermenge von ca. $1/30$ des Rohextraktvolumens, so daß das entstehende Waschraffinat, das in die Extraktionsstufe zurückgeführt werden kann, praktisch die gleiche Konzentration an $P_2O_5$ aufweist, wie die bei der Extraktion entstehende wäßrige Phase. Die Rückextraktion der Phosphorsäure aus der organischen Phase kann in bekannter Weise mit Wasser oder einer wäßrigen Alkalilösung erfolgen, wobei im ersten Fall eine gereinigte Säure und im zweiten Fall eine Alkaliphosphoatlösung entsteht. Die Mengenverhältnisse Wasser bzw. Alkalilösung zu Extraktphase sollen so groß sein, daß die gesamte Phosphorsäure aus der organischen in die wäßrige Phase übergeführt wird. Für die weitere Verwendung der entstehenden gereinigten Säure bzw. Alkaliphosphatlösung ist es zweckmäßig, das darin gelöste Lösungsmittel z.B. durch eine Strippung mit Dampf zu entfernen bzw. zurückzugewinnen.

Die erfindungsgemäß aus der Extraktionsstufe erhaltene Raffinatsäure enthält zwischen 30 und 60, vorzugsweise zwischen 45 und 50 % des eingesetzten Roh-$P_2O_5$ in einer Konzentration von mindestens 28 vorzugsweise zwischen 30 und 32 % $P_2O_5$. Dies ist nämlich gerade die Konzentration an $P_2O_5$, wie sie auch beim Aufschluß von Phosphaterz mit Schwefelsäure nach dem Dihydratverfahren in der Rohsäure vorliegt und die als Ausgangsprodukt für das an sich bekannte Fällungsreinigungs-Verfahren dient.

Zunächst werden - falls erforderlich - aus dem wäßrigen Phosphorsäureraffinat die Lösungsmittelreste durch Strippung mit Dampf entfernt. Die oben beschriebene Eliminierung von Cadmium und anderen Schwermetallen und Arsen durch den Einsatz von bestimmten Thioestern kann alternativ anstelle in der vorgereinigten Rohsäure auch an dieser Stelle in dem wäßrigen Phosphorsäureraffinat erfolgen.

Das wäßrige Phosphorsäureraffinat wird dann (eventuell nach Entfernung von Schwermetallionen und Arsenionen) mit einer wäßrigen Alkalilösung neutralisiert, so daß die Verunreinigungen in Form eines Neutralisationsschlammes von Phosphaten und/oder Hydroxiden ausfallen und eine gereinigte Alkaliphosphatlösung entsteht, die durch Filtration von dem Schlamm getrennt wird. Dieser Prozeß ist als Fällungsreinigungsverfahren bekannt und z.B. in Winnacker-Küchler "Chemische Technologie" Bd. 1, 3. Auflage, Carl Hanser Verlag München 1970, Seite 358, beschrieben. Vor der Neutralisation kann die Säure auch noch mit einem Entsulfatisierungs- und Reduktionsmittel behandelt werden, um Sulfationen und Vanadinionen möglichst vollständig durch Ausfällung zu entfernen. Als Alkalilösung wird vorzugsweise Natronlauge oder Natriumkarbonat eingesetzt. Je nach gewünschter Reinheit der entstehenden Alkaliphosphatlösung und der geplanten Weiterverarbeitung kam das Alkali-P-Verhältnis zwischen 5/3 und 2 eingestellt werden. Die Neutralisation kann in einer oder in zwei Stufen erfolgen, wobei der Neutralisationsschlamm beim Zweistufigen Verfahren nach der ersten Stufe separat abgetrennt und nur das Filtrat weiter neutralisiert wird oder ohne Filtration die weitere Neutralisation der Maische erfolgt.

Die gereinigte Phosphatlösung kann nach entsprechender Feineinstellung des genauen Alkali-P-Verhältnisses direkt oder nach entsprechender Eindampfung auf höhere $P_2O_5$-Konzentrationen zu kondensierten Alkaliphosphaten, z.B. Pentanatriumtripolyphosphat, weiterverarbeitet werden. Würde dieser erfindungsgemäße Fällungsreinigungsprozeß für sich alleine, z.B. ausgehend von Rohphosphorsäure, betrieben werden, würden die dabei entstehenden Nachteile den Prozeß unwirtschaftlich machen. Erstens liegt die $P_2O_5$-Ausbeute bei einer separat betriebenen Fällungsreinigung nur bei ca. 80 % und zweitens wären die dabei anfallenden Neutralisationsschlämme ein erhebliches Deponieproblem. Nach der DE-C-20 35 505 könnte dieser Mangel zwar beseitigt werden, indem die Neutralisationsschlämme mit Natronlauge und Wasserglas aufgeschlossen werden. Jedoch ist dieses Verfahren mit einem erheblichen technischen Aufwand verbunden.

Erfindungsgemäß werden eben diese Nachteile beseitigt, indem die beim Fällungsreinigungsverfahren anfallenden Neutralisationsschlämme im Phosphorofen verarbeitet werden. Zweckmäßigerweise werden die Neutralisationsschlämme in noch feuchtem Zustand mit Rohphosphat vermischt und in bekannter Weise, beispielsweise gemäß DE-C-72 58 847, in Formlinge übergeführt, die anschließend auf Sinterrosten gebrannt und danach in elektrothermischen Öfen eingesetzt werden. Auf diese Weise wird das restliche $P_2O_5$ aus den Neutralisationsschlämmen praktisch vollständig in Form von sehr reinem elementarem Phosphor bzw. als Ferrophosphor wiedergewonnen. Die kationischen Verunreinigungen aus den Filterschlämmen werden mit der Phosphorofenschlacke bzw. mit dem Filterstaub aus den Cotrellapparaten ausgeschleust.

Das Prinzip des erfindungsgemäßen Verfahrens beruht darauf, aus handelsüblicher Rohphosphorsäure mit einem $P_2O_5$-Gehalt von mindestens 45 % nacheinander mit Hilfe der Extraktionstechnologie, mit dem Fällungsreinigungsverfahren und schließlich mit der elektrothermischen Methode das $P_2O_5$ praktisch in 100%iger Ausbeute zu gewinnen. Von 100 Teilen eingesetztem $P_2O_5$ werden demnach ca. 50 Teile im Extraktionsschritt gereinigt und fallen als Orthophosphorsäure oder als Alkaliphosphatlösung an. Weitere 40 Teile gereinigtes $P_2O_5$ fallen bei der Neutralisation als Alkaliphosphatlösung mit einem Alkali-P-Verhältnis von 5/3 bis 2 : 1 an, während die restlichen 10 Teile im Phosphorofen zu etwa 9 Teilen in Form elementaren Phosphor und 1 Teil Ferrophosphor verarbeitet werden.

Die entscheidenden Vorteile dieses Verbundprozesses sind:

1. Jeder Verfahrensschritt arbeitet in seinem optimalen Wirkungsbereich.

a) Als Ausgangsmaterial kann jede handelsübliche Rohsäure eingesetzt werden. Der Extraktionsschritt ist technisch sehr einfach durchzuführen. Es wird nur eine Stufe benötigt; es kommt zu keinen Verkrustungen und ausbeutesteigende Chemikalien (z.B. Schwefelsäure) erübrigen sich. Die hohe Selektivität ermöglicht den Verzicht auf die Waschung oder die Verwendung von nur bis zu 3 Waschstufen. Die wäßrigen Rückstände dienen als Ausgangsprodukt für die Neutralisation.

b) Die aus der Extraktion anfallende Raffinatsäure mit ca. 30 % $P_2O_5$ entspricht der Säure aus dem Dihydratprozess. Neutralisation und Filtration bis zum Alkali-P-Verhältnis 2 :1 sind technisch sehr einfache Verfahrensschritte. Der Prozess ist äußerst wirtschaftlich und liefert direkt weiterverarbeitbare Produkte.

c) Die Neutralisationschlämme können als Feststoffe im Phosphorofen eingesetzt werden. Auch größere Konzentrationen an Verunreinigungen können bewältigt werden. Insbesondere organische Verunreinigungen werden völlig zerstört.

2. Die $P_2O_5$-Ausbeute über alles ist, wie bereits gesagt, praktisch 100 %. Selbst der im Phosphorofen als Ferrophosphor anfallende geringe Teil des Phosphors ist ein Handelsprodukt und kein Abfallstoff.

3. Es gibt praktisch keine Deponieprobleme. Die bei der Extraktion anfallende wäßrige Raffinatphase ist Ausgangsprodukt für die anschließende Fällungsreinigung. Die Neutralisationschlämme der Fällungsreinigung wiederum werden im Phosphorofen verarbeitet. Die Phosphorofenschlacke ist problemlos zu deponieren bzw. wird sogar im Wege- oder Deichbau eingesetzt. Der bei der Vorreinigung anfallende Gips enthält praktisch keine Schadstoffe und fällt mengenmäßig nicht ins Gewicht. Lediglich der eventuell anfallende Filterkuchen aus der Abtrennung von Arsen, Cadmium und anderer Schwermetalle müßte einer Spezialdeponie zugeführt werden. Da es sich jedoch um sehr geringe Mengen handelt, wäre dies nur ein untergeordneter Kostenfaktor.

4. Es entstehen verschiedenartige Produkte von der Phosphorsäure über Alkali-Phosphatlösungen bis zum elementaren Phosphor, die ein breites Feld der Anwendung ermöglichen.

Im Folgenden soll das erfindungsgemäße Verfahren an einem Beispiel erläutert werden.

Für die nachfolgenden Versuche wurde eine handelsübliche Rohsäure auf Basis nordafrikanischen Phosphat mit folgender Zusammensetzung verwendet (Alle Angaben in Gew%)

$P_2O_5$: 50,3 Fe: 0,27 Cr: 0,011
$SO_4$: 2,6 Al: 0,12 As: 0,0008
$C_{org}$: 0,048 Mg: 0,71 V: 0,015
F: 0,32 Zn: 0,025 Cd: 0,011

100 kg dieser Säure wurde zunächst auf ca. 80°C erwärmt und nacheinander mit 0,3 % Aktivkohle und 2,14 kg Calciumhydroxid versetzt. Die Mischung wurde ca. 50 Minuten gerührt und schließlich auf einem Druckfilter abfiltriert. Der Filterkuchen wurde mit 10 l heißem Wasser gewaschen und das Waschfiltrat mit dem Primärfiltrat vereinigt.

Die entstehende vorgereinigte Säure hatte folgende Zusammensetzung:

$P_2O_5$: 7,6 Fe: 0,26 Cr: 0,010
$SO_4$: 0,43 Al: 0,11 As: 0,0007
$C_{org}$: 0,009 Mg: 0,67 V: 0,014
F: 0,3 Zn: 0,024 Cd: 0,0010

1000 g dieser vorgereinigten Säure wurden auf eine Temperatur von 70°C gebracht und mit 1,5 g Bis(2-ethylhexyl)dithio-phosphorsäureester versetzt und ca. 30 min gerührt. Danach wurde die Mischung auf 35°C abgekühlt und 10 g Perlit zugegeben. Nach weiteren 30 Minuten Rührzeit wird die Mischung abfiltriert. Die Phosphorsäure enthält keinen Dithiophosphorsäureester mehr. Die Gehalte an Cd und As leigen jeweils unter 0,0001 Gew%.

Für die weiteren Versuche wurde jedoch die vorgereinigte, Cadmium und Arsen enthaltene Säure (Analyse siehe oben) verwendet.

In einer Mixer-Settler Einheit wurden gleichzeitig 1666,3 g/h dieser Säure und 256,2 g/h rezirkuliertes Waschraffinat, das in die Säureleitung einmündete und dem zuvor 10 g Bariumkarbonat zugesetzt wurden, mit 5826,1 g/h wassergesättigten Amylalkohols extrahiert, wobei die wäßrige Phase kontinuierlich geführt und die organische Phase darin dispergiert wurde. Es entstanden 6530,6 g/h organischer Extrakt, der 7,34 % $P_2O_5$ und 0,0033 % Eisen enthielt, sowie 1218 g/h wäßriger Rückstand mit untenstehender Zusammensetzung. Der organische Extrakt wurde mit Wasser im Volumenverhältnis 30:1 (org.:wäßrig) in einer dreistufigen Mixer-Settler-Anordnung im Gegenstrom gewaschen und schließlich in einer Extraktionskolonne mit rotierenden Einbauten mit Wasser im Volumenverhältnis 6:1 (org.:wäßrig) reextrahiert. Die dabei entstehende Reinsäure wurde bis zu einem $P_2O_5$-Gehalt von ca. 60 % konzentriert.

Zusammensetzung der Reinsäure:
$P_2O_5$: 59,7 Fe: 0,0001 Cr: < 0,0001
$SO_4$: 0,04 Al: <0,0001 As: 0,0004
$C_{org}$: 0,05 Mg: <0,0001 V: 0,0001
F: 0,01 Zn: <0,0001 Cd: < 0,0001

In der bei der Extraktion anfallenden wäßrigen Phase (1218 g/h) waren 393,4 g/h $P_2O_5$ enthalten. Dies entspricht einem Anteil von 48,5 % des Roh-

$P_2O_5$ oder anders ausgedrückt: die Ausbeute betrug also 51,5 %. Die Raffinatsäure hatte folgende Zusammensetzung:

$P_2O_5$: 32,3 Fe: 0,36 Cr: 0,016
$SO_4$: 0,17 Al: 0,15 As: 0,0002
F: 0,3 Mg: 0,92 V: n. bestimmt
Amylalkohol: 0,3 Zn: 0,033 Cd: 0,0018

Diese Säure wurde am Kopf einer Füllkörperkolonne aufgegeben und durch Einblasen von Dampf am unteren Kolonnenende von gelöstem und suspendiertem Alkohol befreit, wobei die Zusammensetzung der Säure und insbesondere der $P_2O_5$-Gehalt praktisch erhalten blieb.

200 g der gestrippten Raffinatsäure wurden bei 70°C mit 825 g Natronlauge (50 %) bis pH 8,4 neutralisiert. Nach einer Rührzeit von 30 min wurde bei 80°C abfiltriert und der Kuchen dreimal mit jeweils 90 ml heißem Wasser gewaschen. Filtrat und Waschwasser wurden vereinigt, wobei 1762 g einer Dinatriumphosphatlösung folgender Zusammensetzung anfiel:

$P_2O_5$:18,7 Fe: 0,0003 Cr: < 0,0001
$SO_4$: 0,2 Al: <0,0050 As: 0,0001
F: 0,0029 Mg: 0,023 V: 0,0003
$C_{org}$ : 0,0090 Zn: 0,0024 Cd: 0,0001

Außerdem fallen dabei 444 g Filterkuchen an.

1 kg dieses Neutralisationsschlammes (aus mehreren Versuchen) mit einem Haft- und Kristallwassergehalt von ca. 45 % wird mit 4 kg gemahlenem Phosphaterz vermischt und unter Aufdüsen von Wasser in einer rotierenden Trommel zu Granulaten agglomeriert. Nach dem Trocknen und Sintern bei etwa 950°C haben diese Granalien eine Abriebfestigkeit von > 90 % und sind für den Einsatz im Phosphorofen geeignet.

**Patentansprüche**

1. Verfahren zur Reinigung von roher Naßverfahrensphosphorsäure, die einen Gehalt an $P_2O_5$ von 45-54 Gew% aufweist, indem man das Ausgangsprodukt mit einem organischen Lösungsmittel, das mit Wasser nicht oder nur begrenzt mischbar und Phosphorsäure zu lösen imstande ist, so in Kontakt bringt, daß unter Bildung eines wäßrigen Phosphorsäureraffinates, welches einen geringeren $P_2O_5$-Gehalt als das Ausgangsprodukt besitzt, lediglich ein Teil des im Ausgangsprodukt enthaltenen $P_2O_5$ von dem Lösungsmittel aufgenommen wird, anschließend die dadurch entstandene organische Phosphorsäurelösung von dem Phosphorsäureraffinat trennt und auswäscht, die erhaltene Waschlösung in den Prozeß zurückführt und aus der gewaschenen organischen Phosphorsäurelösung gereinigte Phosphorsäure oder Phosphatsalzlösungen gewinnt, während man das verbliebene Phosphorsäureraffinat einer anderweitigen Verwendung zuführt, dadurch gekennzeichnet, daß man

a) durch Vermischen des Ausgangsproduktes mit dem organischen Lösungsmittel in einer einzigen Verfahrensstufe so viel Phosphorsäure aus der rohen Naßverfahrensphosphorsäure extrahiert, daß zwischen 40 und 70 Gew% des eingesetzten $P_2O_5$ in die organische Phase überführt werden und das entstehende wäßrige Phosphorsäureraffinat nur noch einen $P_2O_5$-Gehalt von 28 bis 32 Gew% aufweist, indem man das Lösungsmittel mit dem Ausgangsprodukt in einem Volumenverhältnis von mehr als 4 : 1 vermischt und die entstandene organische Phosphorsäurelösung von dem Phosphorsäureraffinat abtrennt,

b) dann die abgetrennte organische Phosphorsäurelösung mit einer Waschlösung auswäscht, deren Menge höchstens 5 % des Volumens der Phosphorsäurelösung beträgt, danach die Waschlösung in die Stufe a) zurückführt, dann aus der gewaschenen Phosphorsäurelösung in bekannter Weise die gereinigte Phosphorsäure bzw. Phosphatsalzlösung gewinnt,

c) das in Stufe a) entstandene wäßrige Phosphorsäureraffinat - gegebenenfalls nach vorheriger Entfernung von Lösungsmittelresten - mit Alkalien neutralisiert, wobei eine gereinigte Phosphatsalzlösung entsteht und ein sogenannter Neutralisationsschlamm ausfällt,

d) diesen Neutralisationsschlamm von der gleichzeitig entstandenen Alkaliphosphatlösung abtrennt, mit feingemahlenem Phosphaterz vermischt und aus dem Gemisch Phosphatformlinge zur elektrothermischen Phosphorgewinnung herstellt.

2. Verfahren nach Anspruch 1, dadurch gekennzeichnet, daß man aus dem Ausgangsprodukt so viel Phosphorsäure extrahiert, daß ein wäßriges Phosphorsäureraffinat mit einem $P_2O_5$-Gehalt von 30 bis 32 Gew% zurückbleibt.

3. Verfahren nach Anspruch 1 oder 2, dadurch gekennzeichnet, daß man das organische Lösungsmittel mit dem Ausgangsprodukt in einem Volumenverhältnis von 6 : 1 bis 10 : 1 vermischt.

4. Verfahren nach einem der Ansprüche 1 bis 3, dadurch gekennzeichnet, daß man die abgetrennte organische Posphorsäurelösung mit einer Menge an Waschlösung auswäscht, die 3,3 bis 2 % des Volumens der Phosphorsäurelösung beträgt.

5. Verfahren nach einem der Ansprüche 1 bis 4, dadurch gekennzeichnet, daß man durch Vermischen des Ausgangsproduktes mit dem organischen Lösungsmittel 50 bis 55 Gew% des eingesetzten $P_2O_5$ in die organische Phase überführt.

6. Verfahren nach einem der Ansprüche 1 bis 5, dadurch gekennzeichnet, daß man das Ausgangsprodukt, bevor es mit dem organischen Lösungsmittel vermischt wird, zur Entfernung von überschüssigem Sulfat und organischen Verbindungen, in an sich bekannter Weise mit Calciumverbindungen und Aktivkohle behandelt.

7. Verfahren nach einem der Ansprüche 1 bis 6, dadurch gekennzeichnet, daß man das Ausgangsprodukt vor der Extraktion oder das erhaltene wäßrige Phosphorsäureraffinat zur Entfernung von Schwermetallionen und Arsen mit Diorganyldithiophosphorsäureestern und einem Adsorptionsmittel behandelt.

8. Verfahren nach einem der Ansprüche 1 bis 7, dadurch gekennzeichnet, daß man in Stufe d den Neutralisationsschlamm und das Phosphaterz in solchen Mengen miteinander vermischt, daß die Menge des Schlammes, berechnet als Trockensubstanz, maximal 15 Gew% des Phosphaterzes beträgt.

**Claims**

1. Process for purifying crude wet-process phosphoric acid containing 45-54 weight% $P_2O_5$ by contacting the starting product with an organic solvent which is immiscible or only partially miscible with water and is capable of dissolving phosphoric acid so that only a portion of the $P_2O_5$ contained in the feed product is absorbed by the solvent with formation of an aqueous phosphoric acid raffinate containing less $P_2O_5$ than the feed product, and separating then the organic phosphoric acid solution obtained from the phosphoric acid raffinate and scrubbing it, recycling the scrubbing solution obtained into the process, and recovering purified phosphoric acid from the scrubbed organic phosphoric acid solution, the remaining phosphoric acid raffinate being used for other purposes, which comprises:

a) extracting in a single stage from the crude wet-process acid a quantity of phosphoric acid sufficient for 40-70 wgt% of the $P_2O_5$ used to go into the organic phase and for the resulting aqueous phosphoric acid raffinate to then contain no more than 28-32 wgt % $P_2O_5$, by mixing the organic solvent with the starting product in a ratio by volume higher than 4:1, and separating the organic phosphorus acid solution obtained from the phosphoric acid raffinate;

b) scrubbing the separated organic phosphoric acid solution with a quantity of a scrubbing solution corresponding to at most 5% of the volume of the phosphoric acid solution; recycling the scrubbing solution formed into stage (a), and recovering from the scrubbed phosphoric acid solution in known manner either purified phosphoric acid or a phosphate salt solution;

c) neutralizing the said aqueous phosphoric acid raffinate produced in stage (a) - if desired after removal of residual solvent - with an alkaline agent with the resultant formation of a purified phosphate salt solution and with precipitation of a so-called neutralization sludge; and

d) separating said neutralization sludge fram alkali metal phosphate solution formed simultaneously be mixing the sludge with finely ground phosphate ore, and converting the mixture into phosphate pellets for use in electrothermal phosphorus production.

2. Process as claimed in claim 1, wherein phosphoric acid is extracted from the starting product to an extent necessary for the remaining aqueous phosphoric acid raffinate to contain 30-32 weight%, $P_2O_5$.

3. Process as claimed in claim 1 or 2, whrein the organic solvent is mixed with the starting product in a ratio by volume of 6:1 to 10:1.

4. Process as claimed in any of claims 1-3, wherein the separated organic phosphoric acid solution is scrubbed with a quantity of scrubbing solution corresponding to 3.3-2% of the volume of the phosphoric acid solution.

5. Process as claimed in any of claims 1-4, wherein the feed product is mixed with the organic solvent so that 50-55 weight% of the $P_2O_5$ content is extracted into the organic phase.

6. Process as claimed in any of claims 1-5, wherein the starting product is first freed from sulfate in excess and organic contaminants by subjecting it to conventional treatment with a calcium compound and active carbon, and then mixed with the organic solvent.

7. Process as claimed in any of claims 1-6, wherein the starting product is treated, prior to extracting it, or the aqueous phosphoric acid raffinate obtained is treated with a diorganyldithiophosphoric acid ester and an adsorbent.

8. Process as claimed in any of claims 1-7, wherein, in stage d), the neutralization sludge and phosphate are are mixed in proportions such that the quantity of sludge, calculated as dry substance, corresponds to at most 15 wgt % of the phosphate ore.


**Revendications**

1. Procédé de purification d'acide phosphorique brut préparé par voie humide, présentant une teneur en $P_2O_5$ de 45-54 % en poids en mettant le produit de départ en contact avec un solvant organique non miscible ou seulement partiellement miscible avec l'eau et capable de dissoudre l'acide phosphorique de telle sorte qu'une partie seulement au $P_2O_5$ contenu dans le produit de départ soit absorbée par le solvant avec formation d'un acide phosphorique raffiné aqueux présentant une teneur en $P_2O_5$ plus faible que le produit de départ, en séparant ensuite la solution organique d'acide phosphorique formée de l'acide phosphorique raffiné et en la lavant, en recyclant la solution de lavage dans le procédé et en récupérant l'acide phosphorique purifié ou des solutions de sels phosphates à partir de la solution organique lavée d'acide phosphorique, tandis qu'on utilise l'acide phosphorique raffiné restant pour d'autres applications, caractérisé en ce que

a) on extrait en un seul stade opératoire à partir de l'acide phosphorique brut humide assez d'acide phosphorique pour que 40-70 % en poids du $P_2O_5$ utilisé passent dans la phase organique et que l'acide phosphorique raffiné aqueux formé n'ait plus encore qu'une teneur en $P_2O_5$ de 28-32 % en poids, en mélangeant le solvant organique avec le produit de départ dans un rapport en volume de plus de 4:1, et on sépare la solution organique d'acide phosphorique formée de l'acide phosphorique raffiné,

b) on lave ensuite la solution organique d'acide phosphorique séparée avec une quantité d'une solution de lavage correspondant au plus à 5 % en volume de la solution d'acide phosphorique, on renvoie ensuite la solution de lavage dans le stade a) et on récupère de manière connue à partir de la solution d'acide phosphorique lavée l'acide phosphorique purifié ou la solution de sel phosphate,

c) on neutralise par des alcalis l'acide phosphorique raffiné formé au stade a) éventuellement après élimination au préalable de solvant résiduaire avec formation d'une solution purifiée de sel phosphate et précipitation d'une boue dite boue de neutralisation, et

d) on sépare cette boue de neutralisation de la solution de phosphate alcalin formée simultanément, on la mélange avec du minerai de phosphate finement broyé et on façonne le mélange en briquettes de phosphates pour la fabrication de phosphore par voie électrothermique.

2. Procédé selon la revendication 1, caracterisé en ce que l'on extrait du produit de départ la quantité d'acide phosphorique nécessaire pour qu'il reste un acide phosphorique raffiné aqueux d'une teneur en $P_2O_5$ de 30-32 % en poids.

3. Procédé selon la revendication 1 ou 2, caracterisé en ce que l'on melange le solvant organique avec le produit de depart dans un rapport en volume de 6:1 à 10:1.

4. Procédé selon l'une des revendications 1 à 3, caractérisé en ce que la solution organique d'acide phosphorique séparée est lavée avec une quantité de solution de lavage égale à 3,3-2 % du volume de la solution d'acide phosphorique.

5. Procédé selon l'une des revendications 1 à 4, caractérisé en ce que l'on fait passer 50-55 % en poids du $P_2O_5$ utilisé dans la phase organique par mélange du produit de départ avec le solvant organique.

6. Procédé selon l'une des revendications 1 à 5, caractérisé en ce que le produit de départ est d'abord traité de manière connue avec des composés de calcium et du charbon actif pour en éliminer le sulfate en excès et les composés organiques, et ensuite melangé avec le solvant organique.

7. Procédé selon l'une des revendications 1 à 6, caractérisé en ce qu'on traite avant extraction le produit de départ ou l'acide phosphorique raffiné aqueux obtenu par des esters acides diorganyldithiophosphoriques et un adsorbant pour en éliminer les ions de métaux lourds et l'arsenic.

8. Procédé selon l'une des revendications 1 à 7, caractérisé en ce qu'on mélange au stade d) la boue de neutralisation et le minerai de phosphate en quantités nécessaires pour que la quantité de boue, calculée en substance sèche, soit au plus égale à 15 % en poids du minerai de phosphate.